# EUROPEAN PATENT APPLICATION

(11) **EP 4 603 894 A1**
(43) Date of publication of application: **20.08.2025**
(21) Application number: 22879613.2
(22) Date of filing: 12.10.2022
(51) Int. Cl.: G02C 7/04, G02B 1/04, B29D 11/00, C08F 220/06, C08K 3/013, C08K 5/00

(54) **BLUE LIGHT BLOCKING CONTACT LENSES AND PREPARATION METHOD THEREFOR**

(71) Applicant: Pegavision Corporation, Taoyuan City 333 (TW)
(72) Inventor: CHANG, Han-Yi, Taoyuan City 333, Taiwan (TW); CHEN, Chun-Han, Taoyuan City 333, Taiwan (TW); HSU, Tsung-Kao, Taoyuan City 333, Taiwan (TW); WANG, Wei-Che, Taoyuan City 333, Taiwan (TW); LIN, Yu-Hung, Taoyuan City 333, Taiwan (TW); GAO, Wan-Ying, Taoyuan City 333, Taiwan (TW); LIU, Li-Hao, Taoyuan City 333, Taiwan (TW)
(74) Representative: Winter, Brandl - Partnerschaft mbB
(86) International application number: PCT/CN2022/124788
(87) International publication number: WO 2024/077508

(57) **Abstract**

Two types of blue light blocking contact lenses are provided and are formed by curing different compositions. The first composition includes a blue light blocking component formed by mixing or reacting a first hydrophilic monomer and a yellow dye, a first colored dye component formed by mixing or reacting a second hydrophilic monomer and a first colored dye, at least one third hydrophilic monomer, a crosslinker, and an initiator. The first colored dye includes a green dye, a cyan dye, a blue dye, an orange dye, a red dye, a black dye, or combinations thereof. The second composition includes a blue light blocking component, at least one hydrophilic monomer, a crosslinker, and an initiator. The blue light blocking component is formed by mixing or reacting glycerol monomethacrylate and a yellow dye. Further, methods for preparing the above contact lenses are provided. The above contact lenses can have good anti-blue light effects and color rendering properties because the solubility and compatibility of the dyes in the composition are enhanced.

## Description

### BACKGROUND

### Field of Invention

The present disclosure relates to an ophthalmic product and a preparing method thereof. More particularly, the present disclosure relates to a contact lens for blocking blue light and a preparing method thereof.

### Description of Related Art

In recent years, due to the vigorous development of 3C products, many smart devices, such as mobile phone screens, flat panel displays, computer screens, light-emitting diode lamps (LED lamps), etc. have been widely used in human life. However, the background light sources of these smart devices contain blue light, which will cause damage to the retina when the human eye looks directly at the blue light for a long time.

Blue light having a wavelength of between 380 nm and 500 nm has a shorter wavelength and has a greater energy, which is more likely to cause eye damage than light with other wavelengths, especially to damage the retina. The retina needs to produce vision by carrying out photochemical reactions at any time, and the reaction process needs to consume oxygen. Under the stimulation of blue light, the reaction process easily produces many free radicals and damages the cells. In addition, the cell membrane of the photoreceptor cells of the retina contains many fatty acids, which are also prone to produce free radicals when the cell membrane is stimulated by blue light, causing damage or death to the retinal cells.

Currently, most of the anti-blue light lenses on the market are yellow in color. Although they have anti-blue light function, they are not aesthetically pleasing. When consumers wear anti-blue light lenses, they are like having jaundice at the eye limbus (the location that the cornea contacts the sclera or the corneoscleral limbus), which reduces their willingness to wear the lenses. In view of this, there is an urgent need to develop anti-blue light lenses that can block blue light and have aesthetic appeal to enhance their commercial value.

### SUMMARY

The present disclosure provides a contact lens for blocking blue light, and the contact lens is formed by curing a composition. The composition includes a blue light blocking component formed by mixing or reacting a first hydrophilic monomer and a yellow dye, a first colored dye component formed by mixing or reacting a second hydrophilic monomer and a first colored dye, at least one third hydrophilic monomer, a crosslinker, and an initiator. The first colored dye includes a green dye, a cyan dye, a blue dye, an orange dye, a red dye, a black dye, or combinations thereof.

In some embodiments, the first hydrophilic monomer, the second hydrophilic monomer, and the third hydrophilic monomer are independently selected from the group consisting of N-vinylpyrrolidone (NVP), 2-hydroxyethyl methacrylate (HEMA), glycidyl methacrylate (GMA), glycerol monomethacrylate (GMMA), methacrylic acid, acrylic acid, N,N-dimethyl acrylamide (DMA), N,N-diethyl acrylamide, N-vinyl-N-methyl acetamide, 2-methacryloyloxyethyl phosphorylcholine, and 2-hydroxybutyl methacrylate.

In some embodiments, the composition further includes a second colored dye component, and the second colored dye component is formed by mixing or reacting a fourth hydrophilic monomer and a second colored dye, in which the second colored dye includes a green dye, a cyan dye, a blue dye, an orange dye, a red dye, a black dye, or combinations thereof.

In some embodiments, the fourth hydrophilic monomer is selected from the group consisting of N-vinylpyrrolidone, 2-hydroxyethyl methacrylate, glycidyl methacrylate, glycerol monomethacrylate, methacrylic acid, acrylic acid, N,N-dimethyl acrylamide, N,N-diethyl acrylamide, N-ethyl-N-methyl acetamide, 2-methacryloyloxyethyl phosphorylcholine, and 2-hydroxybutyl methacrylate.

In some embodiments, based on 100 wt% of the composition, the yellow dye is 0.01 wt% to 2 wt%, and the first colored dye is 0.01 wt% to 2 wt%.

In some embodiments, the yellow dye is 0.01 parts by weight to 2 parts by weight, and the first colored dye is greater than 0 parts by weight and less than or equal to 2 parts by weight.

In some embodiments, a weight ratio of the yellow dye to the first hydrophilic monomer is from 1:0.1 to 1:10.

In some embodiments, a weight ratio of the first colored dye to the second hydrophilic monomer is from 1:0.1 to 1:10.

In some embodiments, the yellow dye is selected from the group consisting of Reactive Yellow 15, Reactive Yellow 86, and Reactive Yellow 83.

In some embodiments, the first colored dye has a vinyl polymerizable group, a sulfonic acid group, a sulfonyl group, a sulfonate group, an amide group, or combinations thereof.

In some embodiments, the first colored dye is selected from the group consisting of Reactive Blue 4, Reactive Blue 19, Reactive Blue 21, Reactive Blue 69, Reactive Blue 163, Reactive Blue 246, Reactive Blue 247, Reactive Red 11, Reactive Red 180, Reactive Black, Reactive Orange 78, and a pigment green (Pigment Green 7).

The present disclosure provides a method of preparing the contact lens for blocking blue light of any one of the previous embodiments, and the method includes the following operations. The first hydrophilic monomer and the yellow dye are mixed to form a first mixed solution. The first mixed solution is heated to 25 °C to 80°C to form the blue light blocking component, in which a heating time is 0.5 hours to 24 hours. The second hydrophilic monomer and the first colored dye are mixed to form a second mixed solution. The second mixed solution is heated to 25 °C to 80°C to form the first colored dye component, in which a heating time is 0.5 hours to 24 hours. The blue light blocking component, the first colored dye component, the at least one third hydrophilic monomer, the crosslinker, and the initiator are cured.

In some embodiments, the method further includes before heating the first mixed solution to 25 °C to 80°C, adding an alkaline substance and an inhibitor to the first mixed solution.

In some embodiments, the method further includes before heating the second mixed solution to 25 °C to 80°C, adding an alkaline substance and an inhibitor to the second mixed solution.

The present disclosure provides a contact lens for blocking blue light, and the contact lens is formed by curing a composition. The composition includes a blue light blocking component, at least one hydrophilic monomer, a crosslinker, and an initiator. The blue light blocking component is formed by mixing or reacting glycerol monomethacrylate (GMMA) and a yellow dye.

In some embodiments, based on 100 wt% of the composition, the yellow dye is 0.01 wt% to 2 wt%.

In some embodiments, the yellow dye is selected from the group consisting of Reactive Yellow 15, Reactive Yellow 86, and Reactive Yellow 83.

In some embodiments, a weight ratio of the yellow dye to the glycerol monomethacrylate is from 1:0.1 to 1:10.

The present disclosure provides a method of preparing the contact lens for blocking blue light of any one of the previous embodiments, and the method includes the following operations. The glycerol monomethacrylate and the yellow dye are mixed to form a mixed solution. The mixed solution is heated to 25 °C to 80°C to form the blue light blocking component, in which a heating time is 0.5 hours to 24 hours. The blue light blocking component, the at least one hydrophilic monomer, the crosslinker, and the initiator are cured.

In some embodiments, the method further includes before heating the mixed solution to 25 °C to 80°C, adding an alkaline substance and an inhibitor to the mixed solution.

### BRIEF DESCRIPTION OF THE DRAWINGS

The disclosure can be more fully understood by reading the following detailed description of the embodiment, with reference made to the accompanying drawings.
Fig. 1 shows contact lenses obtained by preparing methods in accordance with various embodiments of the present disclosure.
Figs. 2-7 show transmittance spectra of contact lenses in accordance with various embodiments of the present disclosure.

### DETAILED DESCRIPTION

The following illustrates the embodiments of the present disclosure regarding "contact lenses for blocking blue light" by specific concrete examples. The advantages and effects of present disclosure can be understood by a person having ordinary skill in the art through the contents disclosed by this disclosure. This disclosure may be implemented or applied by other specific embodiments, and the details of this disclosure may be modified and changed in various ways based on different views and applications without departing from the concept of this disclosure. The following embodiments will further detail the technical aspects of this disclosure, but the disclosed contents are not intended to limit the protection scope of this disclosure.

Unless otherwise defined, all technical and scientific terms used in this disclosure have the same meaning as commonly understood by a person having ordinary skill in the art. Any terms expressed in the singular form herein are meant to also include the plural form.

All percentages mentioned herein are weight percentages unless otherwise indicated. When a series of ranges of upper and lower limits are provided, all combinations of the mentioned ranges are covered, as if the combinations were explicitly listed. In this disclosure, the range indicated by "one value to another" is a summary representation that avoids listing all the values in the range. Therefore, the entry for a particular numerical range covers any numerical value within that range and a smaller numerical range defined by arbitrary numerical value within that range, as if the arbitrary value and the smaller numerical range were explicitly stated in the disclosure.

Although a series of operations or steps are utilized below to illustrate the methods disclosed herein, the order in which these operations or steps are shown should not be construed as a limitation of this disclosure. For example, some operations or steps may be performed in a different order and/or in conjunction with other steps. In addition, not all of the operations, steps, and/or features illustrated must be performed in order to implement the embodiments of the present disclosure. In addition, each operation or step described herein may contain several sub-steps or actions.

Research on blue light shows that blue light having a wavelength of between 460 nm and 500 nm has high energy, which helps memory and cognitive function and makes people happy, so the blue light is beneficial blue light. Blue light having a wavelength of between 380 nm and 460 nm can easily cause damage to human eyes, so it is harmful blue light. The present disclosure provides blue light blocking contact lenses having good anti-blue light property. In some embodiments, the contact lenses of the present disclosure have a 5% to 30% blocking rate for harmful blue light having a wavelength of between 380 nm and 460 nm. Moreover, the contact lenses of the present disclosure are colored contact lenses, which are red, orange, yellow, green, blue, or gray, for example. The colored contact lenses have anti-blue light property and are aesthetically pleasing. The present disclosure also provides preparing methods of contact lenses for blocking blue light. Before the composition of the contact lenses is cured, dyes are pretreated with hydrophilic monomers, i.e., the two are mixed or reacted to enhance the solubility of the dyes in the composition for forming the contact lenses, thereby enhancing the color rendering properties and blue light blocking rates of the contact lenses. In other words, the pretreated dyes, which are added to the composition, can effectively improve the compatibility of the formulation, enhance the color vividness of the lenses and the color uniformity of the lenses, and enhance the blocking rates of the lenses to blue light, thereby obtaining contact lenses with multiple colors. In addition, the contact lenses of the present disclosure can be hydrogel contact lenses or silicone hydrogel contact lenses. Various embodiments of the present disclosure are described separately below.

The present disclosure provides a contact lens for blocking blue light, and the contact lens is formed by curing a composition. The composition includes a blue light blocking component formed by mixing or reacting a first hydrophilic monomer and a yellow dye, a first colored dye component formed by mixing or reacting a second hydrophilic monomer and a first colored dye, at least one third hydrophilic monomer, a crosslinker, and an initiator. The blue light blocking component is formed by pretreating the yellow dye with the first hydrophilic monomer. On the other hand, the first colored dye component is formed by pretreating the first colored dye with the second hydrophilic monomer, in which the first colored dye includes a green dye, a cyan dye, a blue dye, an orange dye, a red dye, a black dye, or combinations thereof. Since both the yellow dye and the first colored dye are pretreated, the solubility of both in the composition and the compatibility of both with the other components can be greatly enhanced, thereby providing the contact lens with good color rendering and blue light blocking rate. In some embodiments, the composition includes one or more blue light blocking components, and the blue light blocking components include different pretreated yellow dyes.

A composition for preparing a contact lens may include one or more different colored dye components, such as two, three, or four components. In some embodiments, the composition includes a first and a second colored dye component, and the second colored dye component is formed by mixing or reacting a fourth hydrophilic monomer and a second colored dye, in which the second colored dye includes a green dye, a cyan dye, a blue dye, an orange dye, a red dye, a black dye, or combinations thereof. The first colored dye component and the second colored dye component may have the same colors or different colors. By mixing multiple colored dye components, contact lenses with different colors can be formulated. For example, the composition including a blue light blocking component (containing a pretreated yellow dye) and two colored dye components (containing a pretreated blue dye and a pretreated red dye) can be used to form a purple contact lens. In other embodiments, the composition further includes a third colored dye component, which may have a color same as or different from that of the first colored dye component and/or the second colored dye component. The embodiments of the third colored dye component can refer to the embodiments of the second colored dye component and will not be repeated.

In some embodiments, the first hydrophilic monomer, the second hydrophilic monomer, the third hydrophilic monomer, and the fourth hydrophilic monomer are independently selected from the group consisting of N-vinylpyrrolidone, 2-hydroxyethyl methacrylate, glycidyl methacrylate, glycerol monomethacrylate, methacrylic acid, acrylic acid, N,N-dimethyl acrylamide, N,N-diethyl acrylamide, N-ethyl-N-methyl acetamide, 2-methacryloyloxyethyl phosphorylcholine, and 2-hydroxybutyl methacrylate.

In some embodiments, based on 100 wt% of the composition, the yellow dye is 0.01 wt% to 2 wt%, and the first colored dye is 0.01 wt% to 2 wt%. For example, the yellow dye is 0.01, 0.05, 0.1, 0.5, 1, 1.5, or 2 wt%. For example, the first colored dye component is 0.01, 0.05, 0.1, 0.5, 1, 1.5, or 2 wt%. In some embodiments, based on 100 wt% of the composition, the yellow dye is 0.01 wt% to 2 wt%, and a total of the first colored dye and the second colored dye is 0.01 wt% to 2 wt%. For example, the total is 0.01, 0.05, 0.1, 0.5, 1, 1.5, or 2 wt%. When a weight percentage falls within the above ranges, the contact lens can have good color rendering and good blue light blocking rate, and the wearer can still maintain good visual experience.

In some embodiments, the yellow dye is 0.01 parts by weight to 2 parts by weight, and the first colored dye is greater than 0 parts by weight and less than or equal to 2 parts by weight. For example, the yellow dye is 0.01, 0.05, 0.1, 0.5, 1, 1.5, or 2 parts by weight. For example, the first colored dye is 0.01, 0.05, 0.1, 0.5, 1, 1.5, or 2 parts by weight. When a weight falls within the above ranges, the contact lens can have good color rendering and blue light blocking rate, and the wearer can still maintain good visual experience. In some embodiments, the first hydrophilic monomer, the second hydrophilic monomer, and the third hydrophilic monomer are 30 to 99 parts by weight. In other embodiments, the first hydrophilic monomer, the second hydrophilic monomer, the third hydrophilic monomer, and the fourth hydrophilic monomer are 30 to 99 parts by weight.

In some embodiments, a weight ratio of the yellow dye to the first hydrophilic monomer is from 1:0.1 to 1:10. This range allows for optimal compatibility between the two. For example, the weight ratio is 1:0.1, 1:0.5, 1:1, 1:2, 1:5, or 1:10. In some embodiments, a weight ratio of the first colored dye to the second hydrophilic monomer is from 1:0.1 to 1:10. This range allows for optimal compatibility between the two. For example, the weight ratio is 1:0.1, 1:0.5, 1:1, 1:2, 1:5, or 1:10. In some embodiments, a weight ratio of the second colored dye to the fourth hydrophilic monomer is from 1:0.1 to 1:10. This range allows for optimal compatibility between the two. For example, the weight ratio is 1:0.1, 1:0.5, 1:1, 1:2, 1:5, or 1:10. When a weight falls within the above ranges, the yellow dye, the first colored dye, and the second colored dye can have good solubility and good compatibility in the composition, thereby making the contact lens have good color rendering.

In some embodiments, the yellow dye is selected from the group consisting of Reactive Yellow 15, Reactive Yellow 86, and Reactive Yellow 83.

In some embodiments, the first colored dye and the second colored dye independently have a vinyl polymerizable group, a sulfonic acid group, a sulfonyl group, a sulfonate group, an amide group, or combinations thereof. For example, the first colored dye and the second colored dye are independently selected from the group consisting of Reactive Blue 4, Reactive Blue 19, Reactive Blue 21, Reactive Blue 69, Reactive Blue 163, Reactive Blue 246, Reactive Blue 247, Reactive Red 11, Reactive Red 180, Reactive Black, Reactive Orange 78, and a pigment green.

In some embodiments, the crosslinker is selected from the group consisting of ethylene glycol dimethacrylate, diethylene glycol dimethacrylate, triethylene glycol dimethacrylate, tetraethylene glycol dimethacrylate, allyl methacrylate, ethylene glycol diallyl ether, triethylene glycol diallyl ether, tetraethylene glycol diallyl ether, 1,3,5-triallyl-1,3,5-triazine-2,4,6(1H,3H,5H)-trione, and 1,1,1- trimethylolpropane trimethacrylate.

In some embodiments, the initiator is selected from the group consisting of a phosphine-oxide-based initiator and a titanium metallocene-based initiator. For example, the phosphine-oxide-based initiator is selected from the group consisting of phenylbis(2,4,6-trimethylbenzoyl)phosphine oxide, bis(2,4,6-trimethylbenzoyl)phenyl phosphine oxide, and bis(2,6-dimethoxylbenzoyl)(2,4,4-trimethylpentyl)phosphine oxide. For example, the titanium metallocene-based initiator includes dicyclopentadienyl bis[2,4-difluoro-3-(1-pyrrolyl)phenyl]titanium.

In some embodiments, the composition for preparing a blue light blocking contact lens further includes an ultraviolet light blocking monomer. For example, the ultraviolet light blocking monomer is selected from the group consisting of a monomer having a benzophenone and a monomer having a benzotriazole. For example, the monomer having the benzophenone includes 4-methacryloxy-2-hydroxy benzophenone, 4-(2-acryloxyethoxy-2-hydroxy benzophenone, or a combination thereof.

The present disclosure provides a method of preparing the contact lens for blocking blue light of any one of the previous embodiments, and the method includes the following operations. The first hydrophilic monomer and the yellow dye are mixed to form a first mixed solution. The first mixed solution is heated to 25 °C to 80°C to form the blue light blocking component, in which a heating time is 0.5 hours to 24 hours. The second hydrophilic monomer and the first colored dye are mixed to form a second mixed solution. The second mixed solution is heated to 25 °C to 80°C to form the first colored dye component, in which a heating time is 0.5 hours to 24 hours. If the above heating temperature is higher than 80°C, too many by-products may be generated, which may result in lower dye bonding rate and lower blue light blocking rate of the lens. The blue light blocking component, the first colored dye component, the at least one third hydrophilic monomer, the crosslinker, and the initiator are cured to form the contact lens. In some embodiments, the temperature at which the first mixed solution or the second mixed solution is heated is 25, 35, 45, 55, 65, 75, or 80 °C. In some embodiments, the heating time of the first mixed solution or the second mixed solution is 0.5, 1, 5, 10, 15, 20, or 24 hours. In some embodiments, the contact lens is a hydrogel contact lens or a silicone hydrogel contact lens. In some embodiments, the composition further includes a silicon-containing monomer. In some embodiments, the curing operation described above involves injecting the composition into a layer between a plastic male mold and a plastic female mold and curing the composition to form a solid lens by polymerizing it with ultraviolet light. The solid lens is then hydrated and stretched, placed in a contact lens packaging solution, and then sealed and sterilized at high temperature to produce a blue light blocking contact lens.

In some embodiments, the method further includes before heating the first mixed solution, adding an alkaline substance and an inhibitor to the first mixed solution. Therefore, the heating operation is to heat the first mixed solution containing the first hydrophilic monomer, the yellow dye, the alkaline substance, and the inhibitor. Thus, after heating, the first hydrophilic monomer bonds to the yellow dye to form the blue light blocking component. According to the above operations, the yellow dye is pretreated by a "synthetic method" to increase the solubility of the blue light blocking component in the composition, thereby improving the color rendering and blue light blocking rate of the contact lens. In some embodiments, the pH of the first mixed solution is 10 to 14. The pH is, for example, 10, 11, 12, 13, or 14. In some embodiments, the inhibitor includes mequinol (MeHQ). In some embodiments, the alkaline substance includes sodium hydroxide (NaOH). In some embodiments, the first mixed solution does not contain water. Under the experimental conditions with the same amount of dye addition, the reaction in an anhydrous environment can result in a higher blue light blocking rate of the lens; on the other hand, the reaction in an aqueous environment results in a lower blue light blocking rate of the lens.

The following is the reaction process of pretreating Reactive Yellow 15 with a hydrophilic monomer glycerol monomethacrylate (GMMA) to form a blue light blocking component under alkaline environment. Firstly, in the presence of sodium hydroxide (NaOH) and an inhibitor (MeHQ), Reactive Yellow 15 will be changed to Reactive Yellow 15 with vinyl groups, which then reacts with GMMA to form a blue light blocking component. Compared to an un-pretreated Reactive Yellow 15, Reactive Yellow 15 pretreated by GMMA has better solubility and compatibility in the composition of contact lens, thereby enhancing the color rendering and blue light blocking rate of the contact lens. The following reaction process can be applied to dyes with a vinyl polymerizable group, a sulfonic acid group, a sulfonyl group, a sulfonate group, an amide group, or combinations thereof.

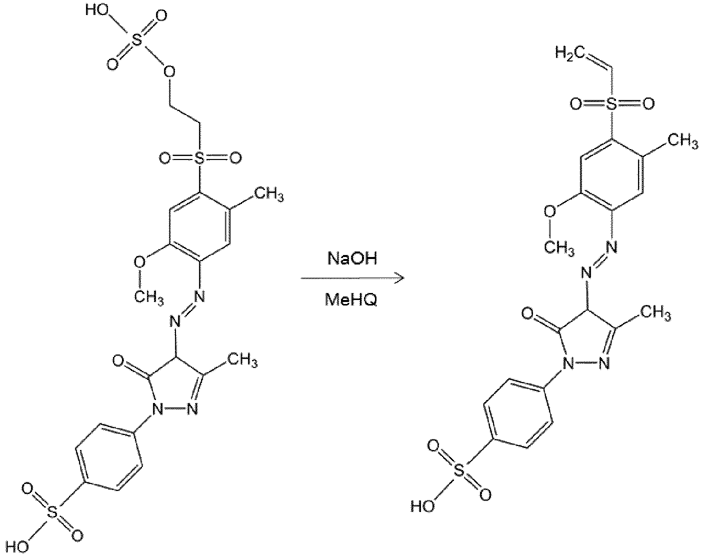

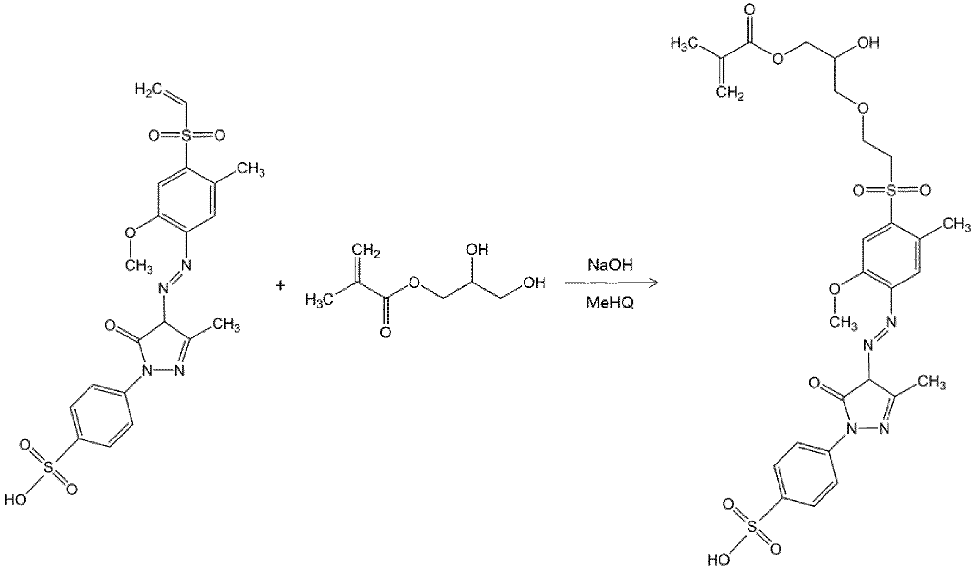

In some embodiments, no alkaline substances and inhibitors are added to the first mixed solution. For example, the first mixed solution is not added with sodium hydroxide and MeHQ. Therefore, no bonds are formed between the first hydrophilic monomer and the yellow dye in the mixed solution after heating, and this mixed solution is the blue light blocking component. According to the above operations, the yellow dye is pretreated by a "mixing method" to increase the solubility of the blue light blocking component in the composition in subsequent operations, thereby improving the color rendering of the contact lens. It is worth noting that if an untreated yellow dye, a hydrophilic monomer, a crosslinker, and an initiator are mixed directly during the formulation of the contact lens composition, the compatibility of the yellow dye will insufficient, which will result in insufficient color rendering of the contact lens and poor anti-blue light effect. In some embodiments, the first mixed solution does not contain water.

In some embodiments, the method further includes before heating the second mixed solution, adding an alkaline substance and an inhibitor to the second mixed solution. Therefore, the heating operation is to heat the second mixed solution containing the second hydrophilic monomer, the first colored dye, the alkaline substance, and the inhibitor. Thus, after heating, the second hydrophilic monomer bonds to the first colored dye to form the first colored dye component. According to the above operations, the first colored dye is pretreated by a "synthetic method" to increase the solubility of the first colored dye component in the composition, thereby improving the color rendering of the contact lens. In some embodiments, the pH of the second mixed solution is 10 to 14. The pH is, for example, 10, 11, 12, 13, or 14. In some embodiments, the inhibitor includes mequinol. In some embodiments, the alkaline substance includes sodium hydroxide. In some embodiments, the second mixed solution does not contain water. Under the experimental conditions with the same amount of dye addition, the reaction in an anhydrous environment can result in a higher blue light blocking rate of the lens; on the other hand, the reaction in an aqueous environment results in a lower blue light blocking rate of the lens.

In some embodiments, no alkaline substances and inhibitors are added to the second mixed solution. For example, the second mixed solution is not added with sodium hydroxide and MeHQ. Therefore, no bonds are formed between the second hydrophilic monomer and the first colored dye component in the mixed solution after heating, and this mixed solution is the first colored dye component. According to the above operations, the first colored dye is pretreated by a "mixing method" to increase the solubility of the first colored dye component in the composition in subsequent operations, thereby improving the color rendering of the contact lens. It is worth noting that if an untreated first colored dye, a hydrophilic monomer, a crosslinker, and an initiator are mixed directly during the formulation of the contact lens composition, the compatibility of the first colored dye will insufficient, which will result in insufficient color rendering of the contact lens. In some embodiments, the second mixed solution does not contain water.

In some embodiments, the method further includes mixing a fourth hydrophilic monomer and a second colored dye to form a third mixed solution and heating the third mixed solution to 25 °C to 80 °C to form a second colored dye composition, in which a heating time is 0.5 hours to 24 hours. The second colored dye component is added to the composition, and then a curing operation is performed. If the above heating temperature is higher than 80°C, too many by-products may be generated, which may result in lower dye bonding rate and lower blue light blocking rate of the lens. In some embodiments, the method further includes before heating the third mixed solution to 25 °C to 80°C, adding an alkaline substance and an inhibitor to the third mixed solution. In some embodiments, no alkaline substances and inhibitors are added to the third mixed solution. The embodiments of the third mixed solution can refer to the embodiments of the second mixed solution and will not be repeated.

In some embodiments, the silicon-containing monomer includes 3-[tris(trimethylsiloxy)silyl]propyl methacrylate (TRIS), 3-methacryloxy-2-hydroxypropoxy)propylbis(trimethylsiloxy)methylsilane (SiGMA), 3-methacryloxy propyltris(trimethylsiloxy)silane, 3-acryloxy propyltris(trimethylsiloxy)silane, 3- acrylamide propyltris(trimethylsiloxy)silane, 3-methacrylamide propyltris(trimethylsiloxy)silane, 3-vinylacrylamide propyltris(trimethylsiloxy)silane, α-acrylamidopropyl-ω-butylpolydimethylsiloxane, or combinations thereof.

The present disclosure provides a contact lens for blocking blue light, and the contact lens is formed by curing a composition. The composition includes a blue light blocking component, at least one hydrophilic monomer, a crosslinker, and an initiator. The blue light blocking component is formed by mixing or reacting glycerol monomethacrylate (GMMA) and a yellow dye. In some embodiments, the contact lens is a hydrogel contact lens or a silicone hydrogel contact lens. In some embodiments, the composition further includes a silicon-containing monomer.

In some embodiments, the yellow dye is selected from the group consisting of Reactive Yellow 15, Reactive Yellow 86, and Reactive Yellow 83. In some embodiments, based on 100 wt% of the composition, the yellow dye is 0.01 wt% to 2 wt%. For example, the yellow dye is 0.01, 0.05, 0.1, 0.5, 1, 1.5, or 2 wt%. When a weight percentage falls within the above ranges, the contact lens can have good color rendering and good blue light blocking rate, and the wearer can still maintain good visual experience.

In some embodiments, a weight ratio of the yellow dye to the glycerol monomethacrylate is from 1:0.1 to 1:10. For example, the weight ratio is 1:0.1, 1:0.5, 1:1, 1:2, 1:5, or 1:10. When a weight falls within the above ranges, the yellow dye can have good solubility and good compatibility in the composition, thereby making the contact lens have good color rendering and blue light blocking rate.

The present disclosure provides a method of preparing the contact lens for blocking blue light of any one of the previous embodiments, and the method includes the following operations. The glycerol monomethacrylate and the yellow dye are mixed to form a mixed solution. The mixed solution is heated to 25 °C to 80°C to form the blue light blocking component, in which a heating time is 0.5 hours to 24 hours. The blue light blocking component, the at least one hydrophilic monomer, the crosslinker, and the initiator are cured to form the contact lens. In some embodiments, the temperature at which the mixed solution is heated is 25, 35, 45, 55, 65, 75, or 80 °C. In some embodiments, the heating time of the mixed solution is 0.5, 1, 5, 10, 15, 20, or 24 hours. The curing operation can refer to the previous embodiments and will not be repeated.

In some embodiments, the method further includes before heating the mixed solution to 25 °C to 80°C, adding an alkaline substance and an inhibitor to the mixed solution. In some embodiments, the pH of the mixed solution is 10 to 14. The pH is, for example, 10, 11, 12, 13, or 14. In some embodiments, the inhibitor includes mequinol. In some embodiments, the alkaline substance includes sodium hydroxide. In some embodiments, no alkaline substances and inhibitors are added to the mixed solution. In some embodiments, the mixed solution does not contain water. Under experimental conditions with the same amount of dye addition, the reaction in an anhydrous environment can result in a higher blue light blocking rate of the lens; on the other hand, the reaction in an aqueous environment results in a lower blue light blocking rate of the lens. In some embodiments, the contact lens is a hydrogel contact lens or a silicone hydrogel contact lens. The advantages of the above embodiments of treating the yellow dyes with the GMMA can refer to the previous embodiments of the first mixed solution and will not be repeated.

The following describes the features of the present disclosure more specifically with reference to experiments. Although the following experiments are described, the materials, their amounts and ratios, processing details, processing procedures, etc., may be appropriately varied without exceeding the scope of the present disclosure. Accordingly, this disclosure should not be interpreted restrictively by the experiments described below.

### Experiment: manufacture of contact lenses

The manufacture of a contact lens included the following operations. A hydrogel composition or a silicone hydrogel composition of a blue light blocking contact lens was injected into a layer between a plastic male mold and a plastic female mold. The composition was cured to form a solid lens by polymerizing it with ultraviolet light. The solid lens was then hydrated and stretched, placed in a contact lens packaging solution, and then sealed and sterilized at high temperature (125 °C, 30 minutes) to complete the manufacture of the blue light blocking colorful contact lens.

The hydrogel composition of the blue light blocking contact lens contained one or more hydrophilic monomers, a blue light blocking component, a crosslinker, and an initiator. The silicone hydrogel composition of the blue light blocking contact lens contained one or more hydrophilic monomers, a blue light blocking component, a crosslinker, an initiator, and a silicon-containing monomer. The hydrophilic monomer included GMMA, HEMA, or a combination thereof. The crosslinker included ethylene glycol dimethacrylate. The initiator included bis(2,4,6-trimethylbenzoyl)phenyl phosphine oxide. The hydrogel or silicone hydrogel composition may further include a colored component or two colored components. The blue light blocking component included a yellow dye that is pretreated by a "synthetic method" or a "mixing method." The colored component included a green dye, a blue dye, an orange dye, a red dye, or a black dye, and these dyes were pretreated by a "synthetic method" or a "mixing method." The "synthetic method" involved heating a mixed solution of a hydrophilic monomer glycerol monomethacrylate (GMMA), a dye, an alkaline substance sodium hydroxide (NaOH), and an inhibitor MeHQ at 25°C to 80°C for at least 12 hours. The "synthetic method" involved heating a mixed solution of a hydrophilic monomeric glycerol monomethacrylate (GMMA) and a dye at 25°C to 80°C for at least 12 hours. In the "synthetic method," the weight ratio of the dye to the GMMA was 1:10, the MeHQ was about 0.07 wt%, and the sodium hydroxide was about 1 wt%.

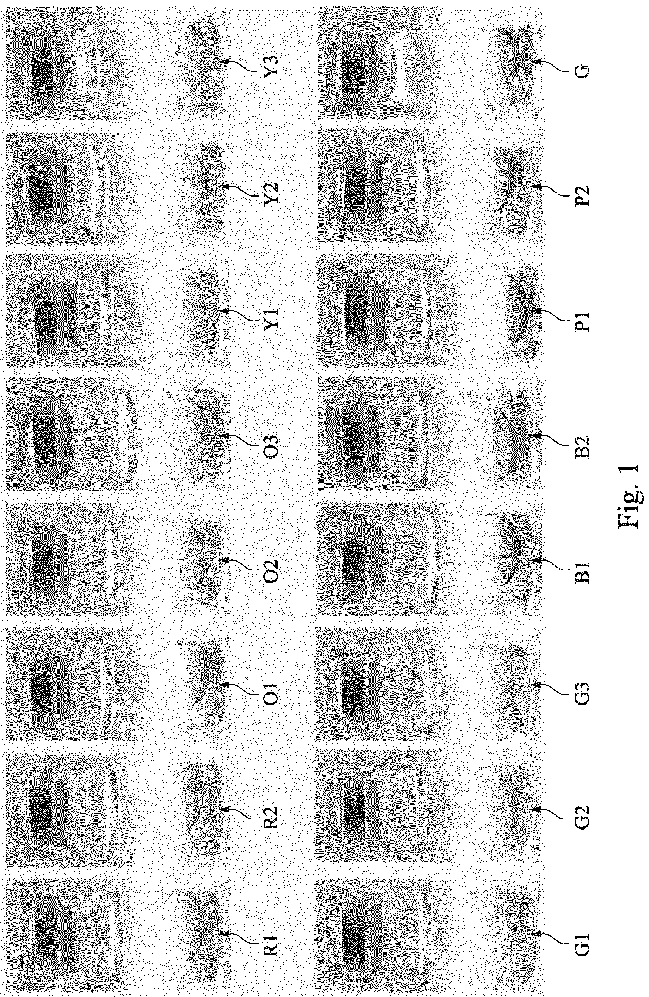

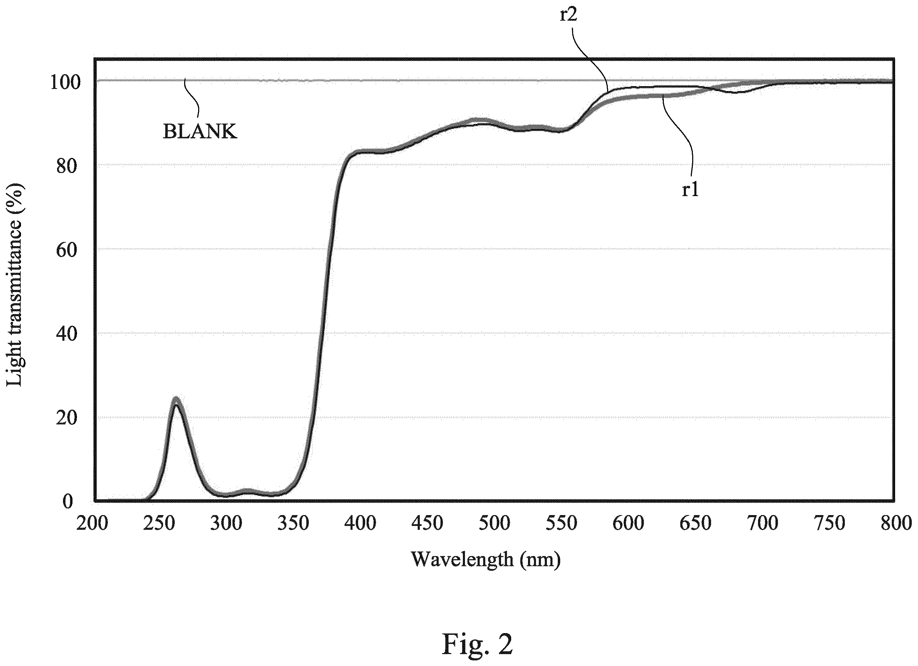

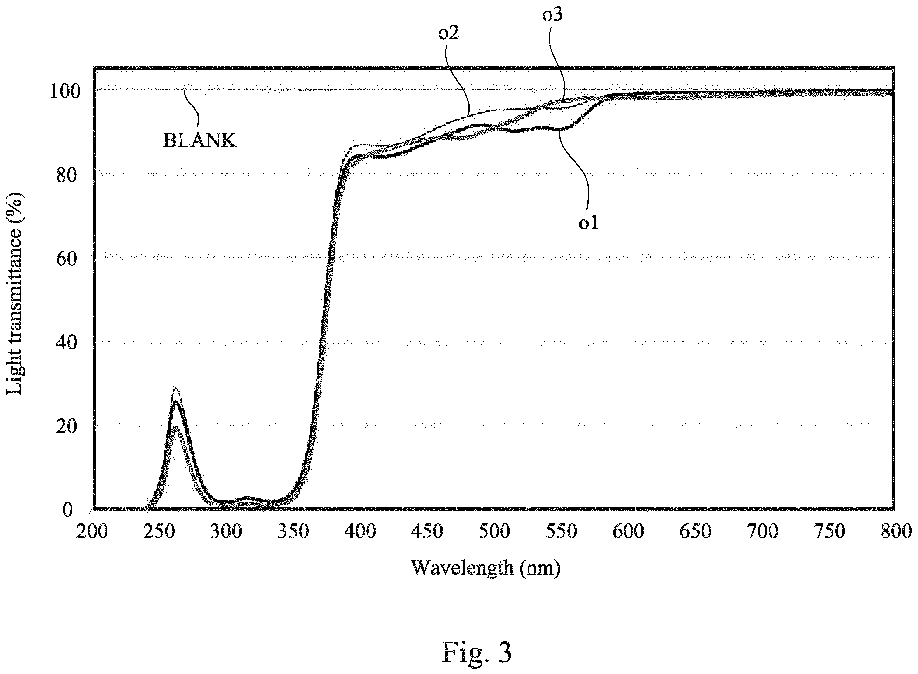

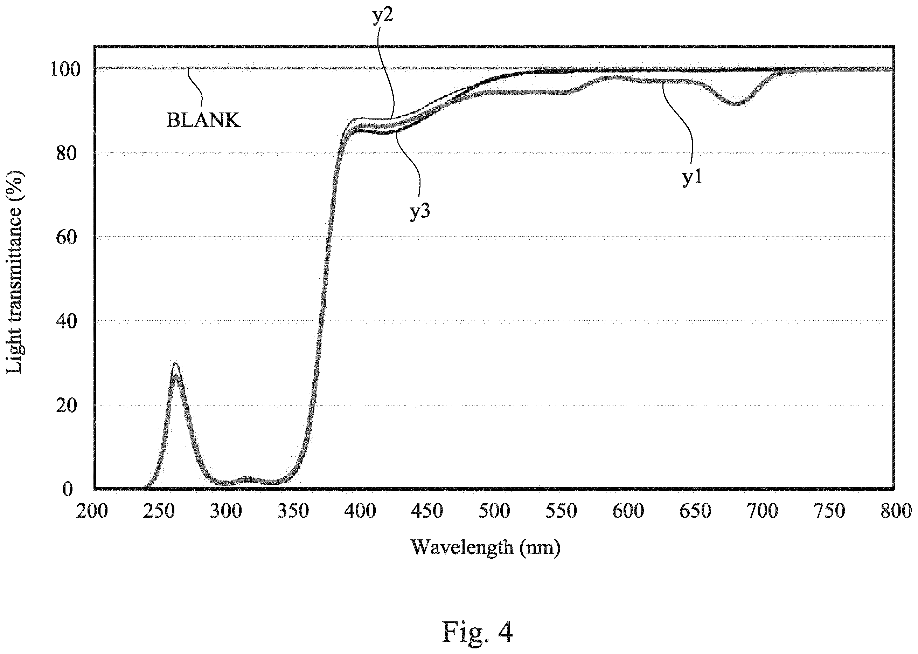

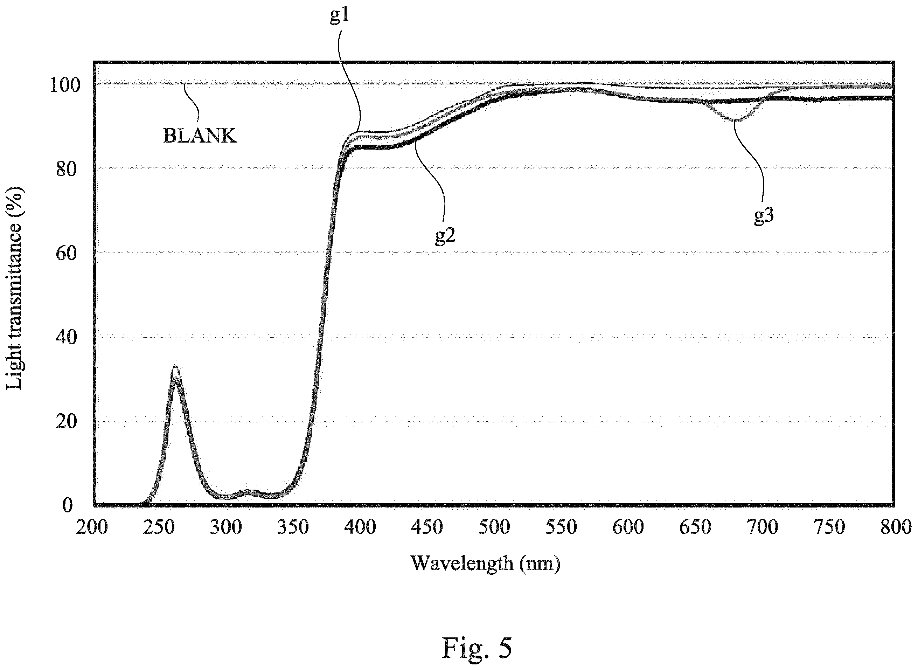

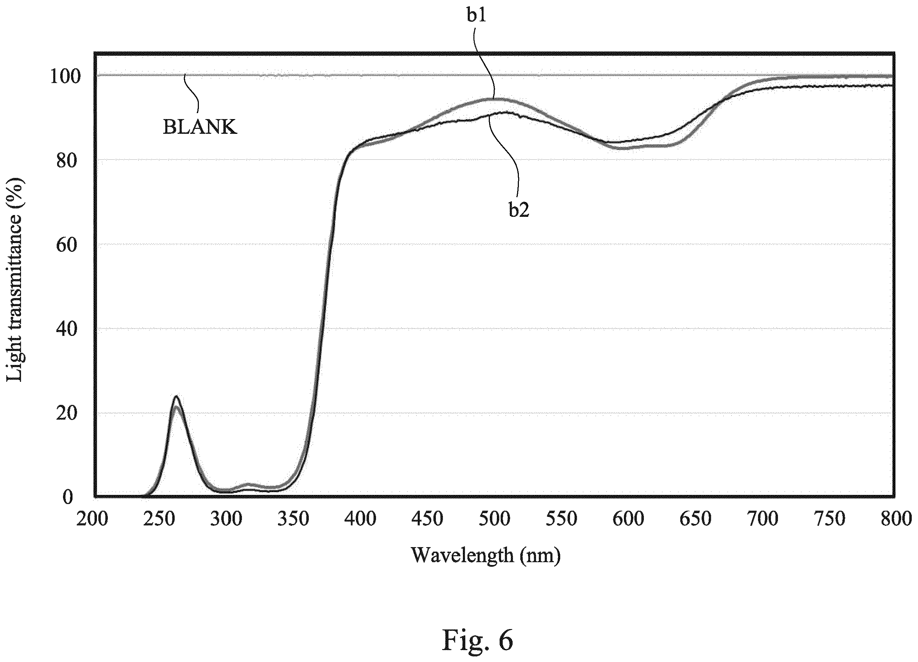

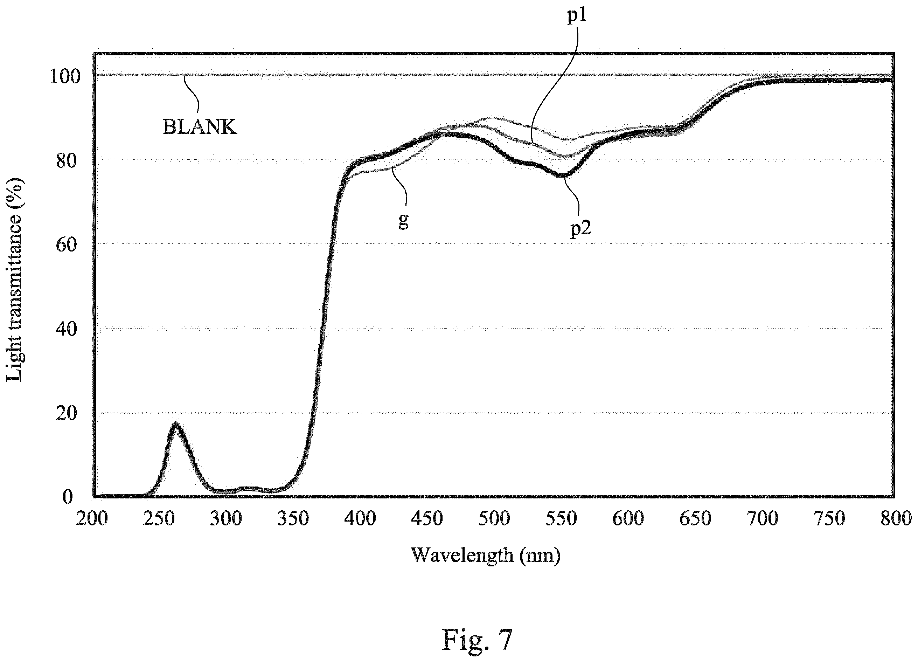

Please refer to Tables 1 and 2 below, which list the components and their ratios of each composition in Examples 1 to 25 and also list the lens prepared by each composition of Examples 1 to 25, the lens color, and the blue light blocking rate, respectively. If a dye was pretreated by the "mixing method," it is marked with M1; if a dye was pretreated by the "synthetic method," it is marked with M2. Please refer to Fig. 1, which shows contact lenses obtained by preparing methods in accordance with various embodiments of the present disclosure. The transmittance spectra of the lenses in Fig. 1 are shown in Figs. 2 to 7. Fig. 1 includes a dark red lens R1, a brownish red lens R2, an orange red lens 01, an orange lens O2, an orange yellow lens O3, an amber lens Y1, a dark yellow lens Y2, a yellow lens Y3, a yellow green lens G1, a green lens G2, a bright green lens G3, a blue lens B1, a gray blue lens B2, an indigo lens P1, a purple lens P2, and a gray lens G. The lenses in Fig. 1 respectively correspond to the lenses of Examples 8-23 in Table 1 and Table 2. Figs. 2 to 7 show curves, r1, r2, o1, o2, o3, y1, y2, y3, g1, g2, g3, b1, b2, p1, p2, and g, respectively corresponding to the light absorption rates of the above lenses and show a curve BLANK of the light absorption rate of a blank lens without dye. From Fig. 1, it can be seen that the present disclosure can form the colorful contact lenses with various colors, and the lenses all have bright colors and can both have anti-blue light effect and aesthetic appearance when the lenses are wore. The light transmittance of the contact lenses was measured by an Ultraviolet/Visible spectrophotometer. The average blue light transmittance (T %) between 380 nm and 460 nm, i.e., the average harmful blue light transmittance, was calculated by the machine program. By subtracting the average blue light transmission rate (T %) from 100%, the blue light blocking rates in Table 1 and Table 2 could be obtained, and they are also known as the harmful blue light blocking rates. In other words, the blue light blocking rate % = 100% - blue light transmittance (T %).

**Table 1**

| Example | Yellow dye | | Green dye | | Blue dye | | Blue dye | | Red dye | | Composition type | Blue light blocking rate (%) | Lens | Lens color |
|---|---|---|---|---|---|---|---|---|---|---|---|---|---|---|
| | Yellow 15 (wt%) | Pretreat ment | Green 7 (wt%) | Pretreat ment | Blue 21 (wt%) | Pretreat ment | Blue 19 (wt%) | Pretreat ment | Red 180 (wt%) | Pretreat ment | | | | |
| 1 | 0.028 | M1 | | | | | 0.097 | M1 | | | Hydrogel | 5.57 | G2 | Green |
| 2 | 0.150 | M1 | | | | | | | | | Hydrogel | 13.05 | Y3 | Yellow |
| 3 | 0.150 | M1 | 0.030 | M1 | | | | | | | Hydrogel | 18.38 | G1 | Yellow green |
| 4 | 0.150 | M1 | | | | | 0.150 | M1 | | | Hydrogel | 14.99 | G2 | Green |
| 5 | 0.150 | M1 | | | | | | | 0.150 | M1 | Hydrogel | 15.11 | O2 | Orange |
| 6 | 0.301 | M1 | | | | | | | | | Hydrogel | 25.09 | Y3 | Yellow |
| 7 | 0.150 | M2 | | | | | | | | | Hydrogel | 25.29 | Y3 | Yellow |
| 8 | 0.085 | M2 | | | | | | | | | Hydrogel | 14.68 | Y3 | Yellow |
| 9 | 0.070 | M2 | | | | | 0.035 | M1 | 0.140 | M2 | Hydrogel | 16.56 | R1 | Dark red |
| 10 | 0.070 | M2 | | | | | | | 0.140 | M2 | Hydrogel | 15.82 | O1 | Orange red |
| 11 | 0.070 | M2 | | | | | | | 0.070 | M2 | Hydrogel | 13.32 | O2 | Orange |
| 12 | 0.070 | M2 | | | 0.015 | M1 | | | 0.140 | M2 | Hydrogel | 17.14 | R2 | Brownish red |
| 13 | 0.070 | M2 | 0.015 | M1 | | | | | 0.035 | M2 | Hydrogel | 11.96 | Y2 | Dark yellow |
| 14 | 0.070 | M2 | 0.030 | M1 | | | | | | | Hydrogel | 11.33 | G1 | Yellow green |
| 15 | 0.070 | M2 | 0.060 | M1 | | | | | | | Hydrogel | 14.98 | G2 | Green |
| 16 | 0.070 | M2 | | | 0.060 | M1 | | | | | Hydrogel | 12.78 | G3 | Bright green |
| 17 | 0.070 | M2 | | | 0.060 | M1 | | | 0.070 | M2 | Hydrogel | 13.82 | Y1 | Amber |
| 18 | 0.070 | M2 | | | | | 0.210 | M1 | | | Hydrogel | 15.47 | B1 | Blue |
| 19 | 0.070 | M2 | | | | | 0.140 | M1 | 0.140 | M2 | Hydrogel | 18.69 | P1 | Indigo |
| 20 | 0.070 | M2 | | | | | 0.140 | M1 | 0.210 | M2 | Hydrogel | 19.38 | P2 | Purple |
| 21 | 0.070 | M2 | | | | | 0.100 | M1 | 0.100 | M2 | Hydrogel | 21.90 | G | Grey |

**Table 2**

| Example | Yellow dye | | Yellow dye | | Blue dye | | Black dye | | Orange dye | | Composition type | Blue light blocking rate (%) | Lens | Lens color |
|---|---|---|---|---|---|---|---|---|---|---|---|---|---|---|
| | Yellow 15 (wt%) | Pretreat ment | Yellow 83 (wt%) | Pretreat ment | Blue 19 (wt%) | Pretreat ment | Black 5 (wt%) | Pretreat ment | Orange 78 (wt%) | Pretreat ment | | | | |
| 22 | 0.070 | M2 | | | | | | | 0.140 | M2 | Hydrogel | 15.51 | O3 | Orange yellow |
| 23 | 0.070 | M2 | | | | | 0.140 | M2 | | | Hydrogel | 15.54 | B2 | Grey blue |
| 24 | | | 0.025 | M1 | 0.075 | M2 | | | | | Hydrogel | 14.68 | G2 | Green |
| 25 | 0.100 | M2 | | | | | | | | | Silicone hydrogel | 26.27 | Y3 | Yellow |

As shown in Table 1 and Table 2, the harmful blue light blocking rates of the blue light blocking contact lenses of Examples 1 to 25 range between 5.57% and 26.27%. Accordingly, the blue light blocking contact lenses of Examples 1 to 25 can substantially achieve the harmful blue light blocking rate of 5% to 30%. Examples 1 to 24 can manufacture the hydrogel contact lenses, and Example 25 can manufacture the silicone hydrogel contact lens. In Example 25, the addition of dye Reactive Yellow15 at about 0.100 wt% and the pretreatment by the synthetic method resulted in a blue light blocking rate of 26.27 % for the lens, which shows that the pretreatment method of the present disclosure can achieve a better blue light blocking effect in the silicone hydrogel composition system.

The blocking rate of the harmful blue light is mainly affected by the concentration of the yellow dye and the pretreatment, while other non-yellow dyes have less effect. Table 3 below shows Examples using only Reactive Yellow15 during preparation.

**Table 3**

| Example | Yellow dye | | | Composition type | Blue light blocking rate (%) | | Lens | Lens color |
|---|---|---|---|---|---|---|---|---|
| | Yellow 15 | | PT | | | | | |
| 2 | 0.150 wt% | Difference: 0.065 wt% | M1 | Hydrogel | 13.05 | The lenses have similar blue light blocking rates. | Y3 | Yellow |
| 8 | 0.085 wt% | | M2 | Hydrogel | 14.66 | | Y3 | Yellow |
| 6 | 0.301 wt% | Difference: 0.151 wt% | M1 | Hydrogel | 25.09 | The lenses have similar blue light blocking rates. | Y3 | Yellow |
| 7 | 0.150 wt% | | M2 | Hydrogel | 25.29 | | Y3 | Yellow |

Example 2 is compared with Example 7, and both lenses are yellow in color, in which the contents of the Reactive Yellow 15 are about 0.150 wt%. In Example 2, the Reactive Yellow 15 was pretreated by the "mixing method M1," such that the blue light blocking rate of the lens was 13.05%. However, in Example 7, the Reactive Yellow 15 was pretreated by the "synthesis method M2," such that the blue light blocking rate of the lens was significantly improved to 25.29%, which is 12.24% higher than the blue light blocking rate of the lens of Example 2. In other words, the blue light blocking rate of the lens in Example 7 is about twice as high as that of the lens in Example 2. Therefore, with the same ratios of yellow dyes, pretreatment of dyes by the synthetic method can greatly improve the effectiveness of the lenses in blocking harmful blue light.

Example 2 is compared with Example 8. In Example 8, only 0.085 wt% of Reactive Yellow 15 was added and pretreated with the synthetic method M2, and the blue light blocking rate of the lens could reach 14.66%. In Example 2, 0.150wt% of Reactive Yellow 15 was added and pretreated with the mixing method M1, and the blue light blocking rate of the lens is 13.05%. It can be seen that the synthetic method of pretreating the dye can make the lens still have good blue light blocking rate with a small amount of dye added. Example 2 is compared with Example 8. The addition amount in Example 8 can be reduced by 0.065 wt%, and during a hydration process, the product made by Example 8 can also reduce the amount of dye dissolution during washing and reduce the process wastewater. Example 6 is compared with Example 7. To achieve a 25% blue light blocking rate for the lenses, Example 6 requires 0.301 wt% of Reactive Yellow 15, while Example 7 uses only 0.150 wt% of Reactive Yellow 15, which means the addition can be reduced by 0.151 wt%. It can be seen that the synthetic method of pretreating the dye can greatly improve the effectiveness of the lenses in blocking harmful blue light.

In summary, the present disclosure provides blue light blocking contact lenses and methods for preparing the lenses. By pretreating dyes of various colors with hydrophilic monomers by the "synthetic method" or "mixing method," then mixing them with other materials for preparing contact lenses (such as other hydrophilic monomers, crosslinkers, initiators, or silicon-containing monomers), and curing them to form lenses, contact lenses with good color rendering and vivid colors can be produced. The contact lenses also have good anti-blue light effect. Compared with the "mixing method," the "synthesis method" can improve the solubility and compatibility of the dyes in the composition more effectively, and further reduce the process wastewater. In addition, the method of the present disclosure can enhance the feasibility of manufacturing colorful lenses by using combinations of the dyes.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A contact lens for blocking blue light, **characterized in that** the contact lens is formed by curing a composition, and the composition comprises:
a blue light blocking component formed by mixing or reacting a first hydrophilic monomer and a yellow dye;
a first colored dye component formed by mixing or reacting a second hydrophilic monomer and a first colored dye, wherein the first colored dye comprises a green dye, a cyan dye, a blue dye, an orange dye, a red dye, a black dye, or combinations thereof;
at least one third hydrophilic monomer;
a crosslinker; and
an initiator.

2. The contact lens of claim 1, **characterized in that** the first hydrophilic monomer, the second hydrophilic monomer, and the third hydrophilic monomer are independently selected from the group consisting of N-vinylpyrrolidone, 2-hydroxyethyl methacrylate, glycidyl methacrylate, glycerol monomethacrylate, methacrylic acid, acrylic acid, N,N-dimethyl acrylamide, N,N-diethyl acrylamide, N-ethyl-N-methyl acetamide, 2-methacryloyloxyethyl phosphorylcholine, and 2-hydroxybutyl methacrylate.

3. The contact lens of claim 1, **characterized in that** the composition further comprises a second colored dye component, the second colored dye component is formed by mixing or reacting a fourth hydrophilic monomer and a second colored dye, and the second colored dye comprises a green dye, a cyan dye, a blue dye, an orange dye, a red dye, a black dye, or combinations thereof.

4. The contact lens of claim 3, **characterized in that** the fourth hydrophilic monomer is selected from the group consisting of N-vinylpyrrolidone, 2-hydroxyethyl methacrylate, glycidyl methacrylate, glycerol monomethacrylate, methacrylic acid, acrylic acid, N,N-dimethyl acrylamide, N,N-diethyl acrylamide, N-ethyl-N-methyl acetamide, 2-methacryloyloxyethyl phosphorylcholine, and 2-hydroxybutyl methacrylate.

5. The contact lens of claim 1, **characterized in that** based on 100 wt% of the composition, the yellow dye is 0.01 wt% to 2 wt%, and the first colored dye is 0.01 wt% to 2 wt%.

6. The contact lens of claim 1, **characterized in that** the yellow dye is 0.01 parts by weight to 2 parts by weight, and the first colored dye is greater than 0 parts by weight and less than or equal to 2 parts by weight.

7. The contact lens of claim 1, **characterized in that** a weight ratio of the yellow dye to the first hydrophilic monomer is from 1:0.1 to 1:10.

8. The contact lens of claim 1, **characterized in that** a weight ratio of the first colored dye to the second hydrophilic monomer is from 1:0.1 to 1:10.

9. The contact lens of claim 1, **characterized in that** the yellow dye is selected from the group consisting of Reactive Yellow 15, Reactive Yellow 86, and Reactive Yellow 83.

10. The contact lens of claim 1, **characterized in that** the first colored dye has a vinyl polymerizable group, a sulfonic acid group, a sulfonyl group, a sulfonate group, an amide group, or combinations thereof.

11. The contact lens of claim 1, **characterized in that** the first colored dye is selected from the group consisting of Reactive Blue 4, Reactive Blue 19, Reactive Blue 21, Reactive Blue 69, Reactive Blue 163, Reactive Blue 246, Reactive Blue 247, Reactive Red 11, Reactive Red 180, Reactive Black, Reactive Orange 78, and a pigment green.

12. A method of preparing the contact lens for blocking blue light of claim 1, **characterized by** comprising:
mixing the first hydrophilic monomer and the yellow dye to form a first mixed solution;
heating the first mixed solution to 25 °C to 80°C to form the blue light blocking component, wherein a heating time is 0.5 hours to 24 hours;
mixing the second hydrophilic monomer and the first colored dye to form a second mixed solution;
heating the second mixed solution to 25 °C to 80°C to form the first colored dye component, wherein a heating time is 0.5 hours to 24 hours; and
curing the blue light blocking component, the first colored dye component, the at least one third hydrophilic monomer, the crosslinker, and the initiator.

13. The method of claim 12, **characterized by** further comprising: before heating the first mixed solution to 25 °C to 80°C, adding an alkaline substance and an inhibitor to the first mixed solution.

14. The method of claim 12, **characterized by** further comprising: before heating the second mixed solution to 25 °C to 80°C, adding an alkaline substance and an inhibitor to the second mixed solution.

15. A contact lens for blocking blue light, **characterized in that** the contact lens is formed by curing a composition, and the composition comprises:
a blue light blocking component formed by mixing or reacting glycerol monomethacrylate and a yellow dye;
at least one hydrophilic monomer;
a crosslinker; and
an initiator.

16. The contact lens of claim 15, **characterized in that** based on 100 wt% of the composition, the yellow dye is 0.01 wt% to 2 wt%.

17. The contact lens of claim 15, **characterized in that** the yellow dye is selected from the group consisting of Reactive Yellow 15, Reactive Yellow 86, and Reactive Yellow 83.

18. The contact lens of claim 15, **characterized in that** a weight ratio of the yellow dye to the glycerol monomethacrylate is from 1:0.1 to 1:10.

19. A method of preparing the contact lens for blocking blue light of claim 15, **characterized by** comprising:
mixing the glycerol monomethacrylate and the yellow dye to form a mixed solution;
heating the mixed solution to 25 °C to 80°C to form the blue light blocking component, wherein a heating time is 0.5 hours to 24 hours; and
curing the blue light blocking component, the at least one hydrophilic monomer, the crosslinker, and the initiator.

20. The method of claim 19, **characterized by** further comprising: before heating the mixed solution to 25 °C to 80°C, adding an alkaline substance and an inhibitor to the mixed solution.
